# EUROPEAN PATENT SPECIFICATION

(11) **EP 3 814 643 B1**
(45) Date of publication and mention of the grant of the patent: **14.02.2024**
(21) Application number: 19827127.2
(22) Date of filing: 25.06.2019
(51) Int. Cl.: F16B 2/06, A41F 11/06, A44B 99/00, E04H 15/64, D06F 55/02, F16B 2/10, F16B 2/14, F16B 2/22

(54) **CLAMP**
KLEMME
PINCE

(30) Priority: 27.06.2018 SE 1800130
(43) Date of publication of application: 05.05.2021
(73) Proprietor: Holdon Systems AB, 26992 Båstad (SE)
(72) Inventor: GUNNARSSON, Staffan, 26992 Båstad (SE)
(86) International application number: PCT/SE2019/000009
(87) International publication number: WO 2020/005129

(56) References cited:
- GB-A- 1 323 294
- GB-A- 2 467 198
- GB-A- 2 467 198
- SE-C2- 514 828
- SE-C2- 522 167
- US-A- 4 679 282
- US-A- 4 686 748
- US-A- 5 388 313
- US-A1- 2006 080 811
- US-S- D 543 896

## Description

The present invention relates to a clamp.

### Background of the invention

Clamps comprising a wedge shaped element that is introduced into a receiving element are known in the art. When the wedge shaped element is being introduced into the receiving element, a shrinking gap between the elements appears, and for example a piece of cloth may be clamped in position here. Typically, such a clamp must have an element that locks the wedge shaped element and the receiving element together and then may release them from each other. Once the two elements have been locked together, it takes considerable force to loosen them from each other, and this is disadvantageous. An example of a clamp of the prior art is shown in GB 2467198 A. It would therefore be desirable with a clamp designed such that it facilitates manually loosening the clamp from its locking state.

An object of the invention is therefore to provide a clamp which is easier to manually loosen from its locking state than prior art clamps.

These and other objects are attained by a clamp according to the independent claim 1.

### Summary of the invention

The invention relates to a clamp 1 comprising at least a lower jaw portion 5 and an upper locking jaw portion 6-7 which comprises an upper jaw portion 6 and a locking stop portion 7. An object may be grasped between the lower jaw portion 5 and upper locking jaw portion 6-7. The upper locking jaw portion 6-7 comprises a wedge shaped portion and the lower jaw portion 5 comprises a receiving element 11 forming an opening into which the wedge shaped portion of the upper locking jaw portion 6-7 may be inserted. The upper locking jaw portion 6-7 comprises a resilient leg 13 arranged to interact lockingly with the lower jaw portion 5. One end of the resilient leg 13 is attached to the upper locking jaw portion 6-7, and the other end may move freely. The upper locking jaw portion 6-7 comprises a locking stop 3 with two ends, where one end of the locking stop 3 is arranged to act on the free end of the resilient leg 13. The locking stop 3 is rotatably arranged around an axis 10, where the end of the locking stop 3 that is arranged to act on the free end of the resilient leg 13, sits closer to the axis 10 than the opposite end of the locking stop 3, such that the positioning of the axis advantageously gives leverage to the rotational movement of the locking stop 3.

### Brief description of the drawings

Fig. 1 shows an embodiment of the fully assembled clamp seen from above at an angle
Fig. 2 shows a cross section through the clamp seen from the side, with the three portions of the clamp fully disassembled
Fig. 3 shows a cross section through the clamp seen from the side, with the clamp in the process of being slid together
Fig. 4 shows a cross section through the clamp seen from the side, with the clamp fully slid together
Fig. 5 shows a cross section through the clamp seen from the side, with the clamp about to leave its locked state
Fig. 6 shows a cross section through the clamp seen from the side, with the clamp in a fully unlocked state
Fig. 7 shows a cross section through the clamp seen from the side, with the clamp slid apart

### Description of a preferred embodiment

The invention relates to a clamp with two portions between which a flat element may be received and locked in place. The received flat element may for example be a fabric or plastic cloth, but may obviously be any ply or sheet like element. The clamp best locks onto a resilient substance, but it may also lock solid sheets in place. Clamps of a generally similar design, corresponding to parts of the design according to the invention are known, so this known part of the design is disclosed in conjunction with the description of an embodiment of the invention below.

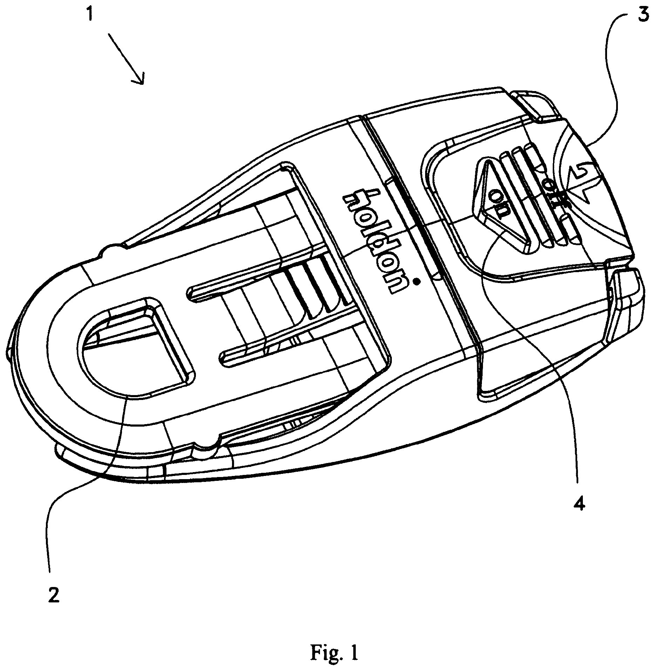

Fig. 1 shows an embodiment of the fully assembled clamp seen from above at an angle. At one end of the clamp, facing left in the drawing, is an opening. The opening is typically intended to receive a loop of a wire or a cord that holds the clamp and the object the clamp holds in its jaws. At the opposite end of the clamp, in the figure facing right, the clamp is provided with a pair of jaws that may grasp for example a piece of cloth. The jaws are described in greater detail in conjuction with the proceeding drawings.

The clamp is often arranged as an attachment element between a wire, typically an elastic one, and a piece of cloth, hanging freely. Forces applied to the clamp due to weight, wind force or straining forces, tighten the clamp such that its jaws grasp the cloth harder. The jaws are thus self-locking and grasp the harder, the harder the cloth pulls on the clamp.

In order to make the clamp leave this self locking state, the clamp is provided with a locking stop 3, which in the figure is fully angled down towards the upper surface of the clamp, and thus is in a locking position, where the self locking action is active. By angling the locking stop upwards, the clamp leaves the self locking state, and the grip of the jaws on the cloth ceases or decreases to such an extent, that the introduced portion 6-7 can be easily push out until the grasping action fully ceases. The locking stop is provided with such a degree of leverage, that the locking stop can be lifted with a moderate degree of force, and it is not necessary to counteract the full force with which the self locking action against the cloth act. Details of this design are described in conjunction with the proceeding drawings.

When the clamp is to grasp a cloth with its jaws, two portions in the clamp are slid towards each other. Typically, a user the holds the cloth in position with one hand, leaving only the remaining hand for handling of the clamp itself. When handling the clamp with one hand, it comes natural to grasp the clamp such that it rests with the lower jaw portion in the hand with the thumb on the locking stop 3. The locking stop may then be deactivated by inadvertently angling it upwards, such that the self locking action ceases just when it is intended to be activated.

The clamp it therefore provided with a grip shelf 4, which protrudes through an opening in the locking stop 3. By instead grasping the clamp between the end provided with an opening 2 and the grip shelf 4, no force is applied to the locking stop 3. There is thus no risk that the locking stop inadvertently deactivates the self locking action on the cloth. This clever component is described in conjunction with the proceeding drawings.

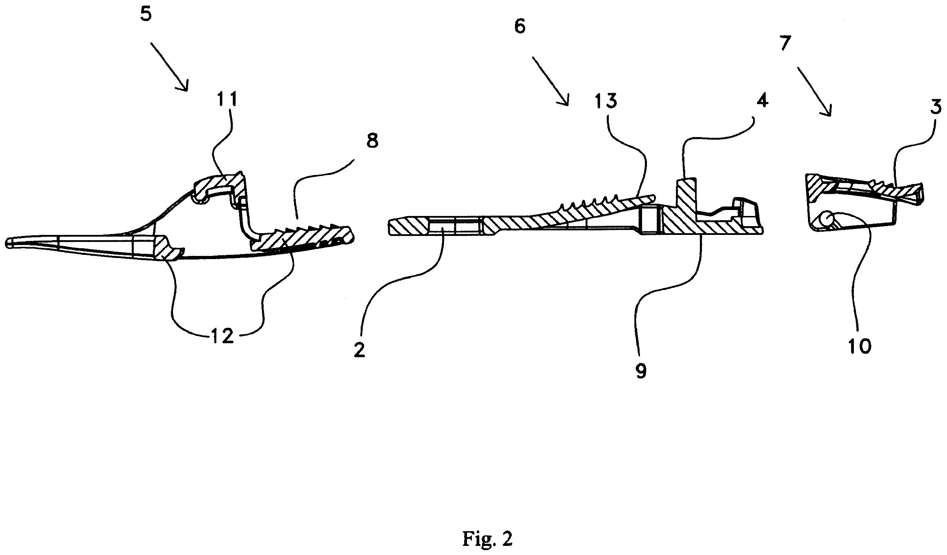

Fig. 2 shows a cross section through the clamp seen from the side, with the three portions 5-7 of the clamp fully disassembled. The three portions are, from the left side of the drawing, a lower jaw portion 5, an upper jaw portion 6, and a locking stop portion 7. The illustration thus depicts the clamp as it looks at a production stage, but when provided to customers, the upper jaw portion 6 and the locking stop portion 7 are joined an jointly form an upper locking jaw portion 6-7, and usually this preassembled portion will be put in the lower jaw portion 5.

The two portions of the locking jaw portion 6-7 are rotatably attached to each other with an axis 10 on the locking stop portion 7, which is snapped in position in a receiving part of the of the upper jaw portion 6. The axis 10 on the locking stop portion 7 may by using excessive force be made to leave the receiving part of the upper jaw portion 6, but is not normally intended to leave the rotatably joined state.

In the proceeding drawings 3-7, the upper jaw portion 6 and the locking stop portion 7 are joined together into one conjoined upper locking jaw portion 6-7. The lower jaw portion 5 and the upper locking jaw portion 6-7 are in a set of positions in relation to each other, intended to illustrate the process used to lockingly attach a piece of cloth in the jaws of the clamp and then release the cloth from the attached state. The drawings neither illustrate the piece of cloth itself, nor the wire with a loop, but the cloth is received from the right side of the clamp and is held by a loop engaging the opening 5 on the left side of the clamp.

Straining forces on the wire and the cloth thus tend to pull the clamp together, such that the lower jaw portion 5 tends to the right and the upper locking jaw portion 6-7 tends to the left.

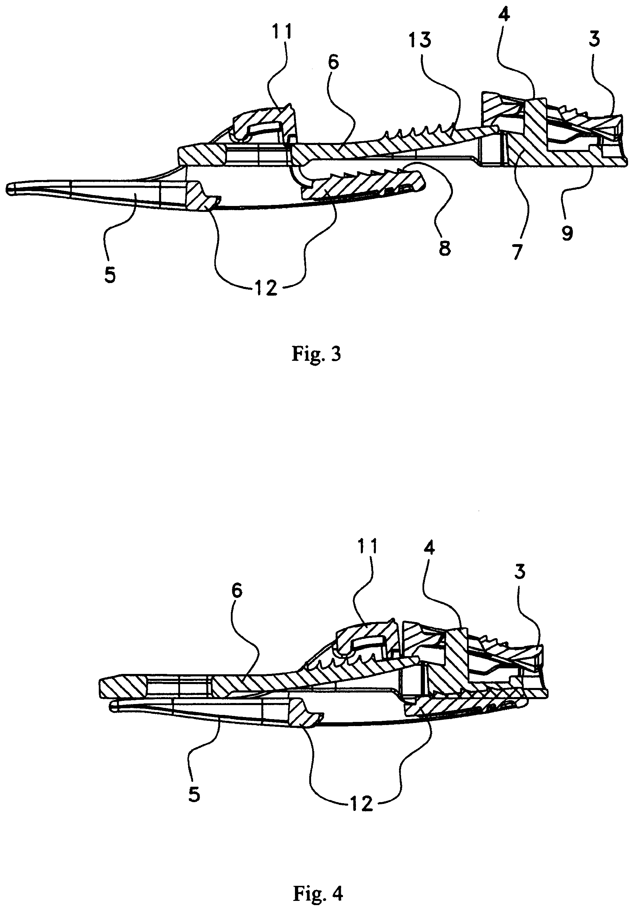

Fig. 3 shows a cross section through the clamp seen from the side, with the clamp in the process of being slid together. The upper locking jaw portion 6-7 has thus been partially been slid in under a receiving element 11 on the lower jaw portion 5 and above a bottom portion 12 on the lower jaw portion 5. The upper locking jaw portion 6-7 comprises a resilient leg 13 angled at an angled upwards from the bottom of the upper locking jaw part and resiliently tends towards this position, but may be forced downwards towards the bottom of the upper locking jaw part. The resilient leg 13 is on its upper side provided with a first set of barbs which, when they reach the receiving element 11 on the lower jaw portion 5, prevents the upper locking jaw portion 6-7 to move rightwards out of the locked joined state. The barbs are designed such that they on the contrary allow the upper locking jaw portion 6-7 moving leftwards towards a locked joined state.

On the bottom of the lower locking jaw part 5, near its right side, there is on the upper side provided a second set of barbs 8, arranged to grasp the cloth. The barbs are directed such that the cloth may easily be slid over the barbs into the jaws, while the barbs grasp the cloth if it is pulled in a direction out of the jaws of the clamp.

Fig. 4 shows a cross section through the clamp seen from the side, with the clamp fully slid together. In this state, a cloth slid into the jaws of the clamp from the right, would have been held locked in place. The sliding together has thus taken place by manually grasping the left side of the clamp and the distinctly extending grip shelf 4, such that the locking stop 3 is not inadvertently angled up. The drawing shows the clamp without a piece of cloth clamped in place, such that the upper locking jaw portion 6-7 and the lower jaw portion 5 may be slid together all the way until the locking stop portion 7 reaches the receiving element 11 on the lower jaw portion 5, and the opening of the jaws is now absent.

The upper jaw portion 6 increases in thickness towards the right in the drawing, and therefore in the direction of the locking stop portion 7, such that as the upper jaw portion 6 is introduced into the lower jaw portion 5, the degree of opening of the jaws gets smaller and smaller. With a piece of cloth positioned in the jaws of the clamp, the upper locking jaw portion 6-7 is pushed in under the receiving element 11 on the lower jaw portion 5 until the jaws grasp the cloth. It can then only be pushed so much further as the resiliency of the cloth and the clamp allows. If a force acts to stretch the wire and the cloth, this stretching force will force the upper locking jaw portion 6-7 further in under the receiving element 11 on the lower jaw portion 5, such that the opening of the jaws decreases further, and thus grasps the cloth harder.

The clamp can therefore not spontaneously leave this locking state, neither with a cloth in the jaws nor without it, without the locking stop 3 being angled upwards.

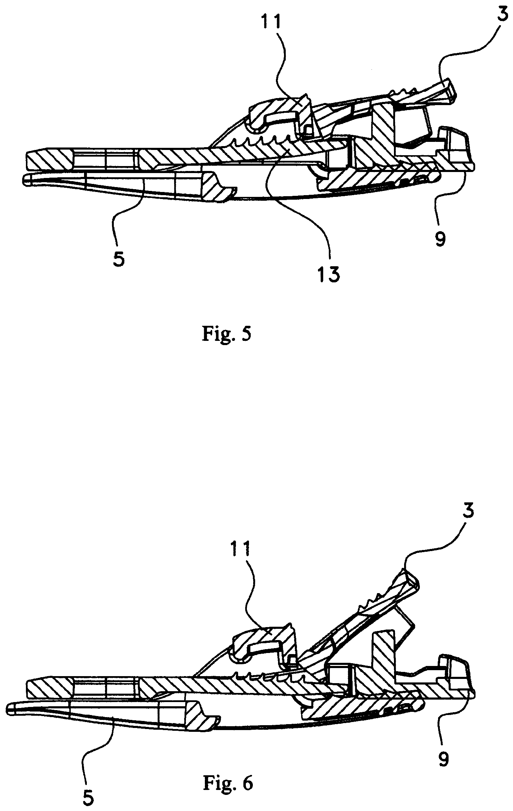

Fig. 5 shows a cross section through the clamp seen from the side, with the clamp about to leave its locked state. The locking stop 3 has here partially been angled upwards and been rotated around the axis 10. The axis 10 sits closer to the left end of the locking stop than to the right end of the locking stop, so a comparatively small force on the right end of the locking stop directed upwards is needed to cause the left end of the locking stop to move downwards with a larger degree of force.

In the drawing, the left end of the locking stop has moved downwards from the resting position and acts on the resilient leg 13. The resilient leg 13 has initiated a motion out of the position where the barbs of the leg interacts with the receiving element 11 on the lower jaw portion 5, but the barbs are still in effect. The upper left end of the locking stop now reaches the receiving element 11, and thereby pushes the upper locking jaw part out a first distance. During this motion, the lower left part of the locking stop is able to push the resilient leg downwards to such an extent, that the barbs can move unhindered. The upper left end of the locking stop pushes apart somewhat more by pushing against the receiving element 11.

Fig. 6 shows a cross section through the clamp seen from the side, with the locking stop fully angled upwards. The left end of the locking stop has in the drawing moved downwards to a maximal extent and acts on the resilient leg 13. The resilient leg 13 has now left the position where the barbs interact with the receiving element 11 on the lower jaw portion 5. The upper locking jaw portion 6-7 can now be pulled out of the receiving element 11 on the lower jaw portion 5 and the jaws are opened, such that they no longer grasp the cloth.

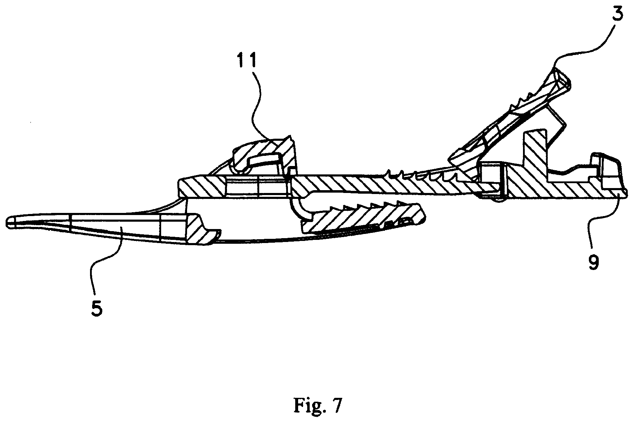

Fig. 7 shows a cross section through the clamp seen from the side, with the clamp slid apart. The upper locking jaw portion 6-7 has now been pulled out to its end position relative to the receiving element 11 on the lower jaw portion 5 and the jaws have now been opened, such that they no longer grasp the cloth.

The invention is being described above with reference to a suggested first embodiment. The suggested first embodiment works advantageously well and is comparatively easily produced, but obviously versions of it and alternative embodiments are conceivable. The first embodiment is made in three parts 5-7, of which two 6-7 then are joined into a single one. Obviously, the upper locking jaw portion 6-7 may be produced as a single conjoined element, where the axis 10 instead may be replaced by a resilient element that allows a certain degree of rotation.

The second set of barbs 8 at the bottom of the lower locking jaw part 5, intended to grasp the cloth, is advantageous but not necessary and may be eliminated. The second set of barbs 8 may also be replaced by a rubber element that is intended to generate a grasping effect for the cloth. The first set of barbs on the resilient leg 13 can also be replaced by some type of frictional connection or the like.

The locking stop 3 axis is placed such that it generates leverage, which obviously is advantageous, but not completely necessary. The locking stop may even be eliminated altogether, and the user then unlocks the clamp by pushing down the leg 13. The advantage of the grip shelf 4 remains, but it would then not protrude trough an opening in the locking stop.

The opening 2 in upper jaw portion 6 may of course be replaced to some other type of attachment element, such as a hook, a bolt or similar.

## Claims

1. A clamp (1) comprising at least a lower jaw portion (5) and an upper locking jaw portion (6-7) which comprises an upper jaw portion (6) and a locking stop portion (7), where an object may be grasped between the lower jaw portion (5) and upper locking jaw portion (6-7), where the upper locking jaw portion (6-7) comprises a wedge shaped portion, where further the lower jaw portion (5) comprises a receiving element (11) forming an opening into which the wedge shaped portion of the upper locking jaw portion (6-7) may be inserted, and where the wedge shaped portion comprises a resilient leg (13) arranged to interact lockingly with the opening in the lower jaw portion (5), where the resilient leg (13) is connected to and angled at an angle upwards from the bottom of the upper jaw portion (6) and resiliently tends towards this angle, where one end of the resilient leg (13) is attached to the wedge shaped portion, and the other end may move freely, where the locking stop portion (7) comprises a locking stop (3) with two ends, where one end of the locking stop (3) acts on the free end of the resilient leg (13) and on the receiving element (11) on the lower jaw portion (5), where the locking stop (3) is rotatably arranged around an axis (10), where the end of the locking stop (3) that acts on the free end of the resilient leg (13) and on the receiving element (11) on the lower jaw portion (5), sits closer to the axis (10) than the opposite end of the locking stop (3), such that the positioning of the axis gives leverage to the rotational movement of the locking stop (3).

## Patentansprüche

1. Eine Klemme (1), umfassend mindestens einen unteren Backenabschnitt (5) und einen oberen Verriegelungsbackenabschnitt (6-7), der einen oberen Backenabschnitt (6) und einen Verriegelungsanschlagabschnitt (7) umfasst, wobei ein Objekt zwischen dem unteren Backenabschnitt (5) und dem oberen Verriegelungsbackenabschnitt (6-7) ergriffen werden kann, wobei der obere Verriegelungsbackenabschnitt (6-7) einen keilförmigen Abschnitt umfasst, wobei ferner der untere Backenabschnitt (5) ein Aufnahmeelement (11) umfasst, das eine Öffnung bildet, in die der keilförmige Abschnitt des oberen Verriegelungsbackenabschnitts (6-7) eingeführt werden kann, und wobei der keilförmige Abschnitt einen elastischen Schenkel (13) umfasst, der so angeordnet ist, dass er mit der Öffnung in dem unteren Backenabschnitt (5) ineinandergreifende zusammenwirkt, wobei der elastische Schenkel (13) mit einem Winkel nach oben von dem Boden des oberen Backenabschnitts (6) verbunden ist und elastisch zu diesem Winkel neigt, wobei ein Ende des elastischen Schenkels (13) an dem keilförmigen Abschnitt befestigt ist und das andere Ende sich frei bewegen kann, wobei der Verriegelungsanschlagabschnitt (7) einen Verriegelungsanschlag (3) mit zwei Enden umfasst, wobei ein Ende des Verriegelungsanschlags (3) auf das freie Ende des elastischen Schenkels (13) und auf das Aufnahmeelement (11) auf dem unteren Backenabschnitt (5) wirkt, wobei das Ende des Verriegelungsanschlags (3), der auf das freie Ende des elastischen Schenkels (13) und auf das Aufnahmeelement (11) auf dem unteren Backenabschnitt (5) wirkt, näher an der Achse (10) als das gegenüberliegende Ende des Verriegelungsanschlags (3) sitzt, so dass die Positionierung der Achse eine Hebelwirkung auf die Drehbewegung des Verriegelungsanschlags (3) gibt.

## Revendications

1. Une pince (1) comprenant au moins une section de mâchoire inférieure (5) et une section de mâchoire de verrouillage supérieure (6-7) qui comprend une section de mâchoire supérieure (6) et une section d'arrêt de verrouillage (7), un objet pouvant être saisi entre la section de mâchoire inférieure (5) et la section de mâchoire de verrouillage supérieure (6-7), la section de mâchoire de verrouillage supérieure (6-7) comprend une partie en forme de coin, la partie de mâchoire inférieure (5) comprend un un élément de réception (11) formant une ouverture dans laquelle la partie en forme de coin de la section de mâchoire de verrouillage supérieure (6-7) peut être insérée, et la partie en forme de coin comprend une patte élastique (13) agencée pour interagir de manière verrouillée avec l'ouverture dans la section de mâchoire inférieure (5), la patte élastique (13) étant reliée à et inclinée selon un angle vers le haut à partir du fond de la section de mâchoire supérieure (6) et tendant élastiquement vers cet angle, et l'autre extrémité peut se déplacer librement, la section d'arrêt de verrouillage (7) comprenant une butée de verrouillage (3) avec deux extrémités, une extrémité de la butée de verrouillage (3) agissant sur l'extrémité libre de la patte élastique (13) et sur l'élément de réception (11) sur la section de mâchoire inférieure (5), la butée de verrouillage (3) étant disposée de manière rotative autour d'un axe (10), l'extrémité de la butée de verrouillage (3) qui agit sur l'extrémité libre de la patte élastique (13) et sur l'élément de réception (11) sur la section de mâchoire inférieure (5), étant plus proche de l'axe (10) que l'extrémité opposée de la butée de verrouillage (3), de telle sorte que le positionnement de l'axe donne un effet de levier au mouvement de rotation de la butée de verrouillage (3 ).
